# EUROPEAN PATENT SPECIFICATION

(11) **EP 0 353 912 B1**
(45) Date of publication and mention of the grant of the patent: **23.11.1994**
(21) Application number: 89307402.1
(22) Date of filing: 20.07.1989
(51) Int. Cl.: B29C 65/34, F16L 47/02, G05B 19/12

(54) **Heat fusion pipe fitting system**
Warmschmelzbares Anschlussstück für Rohre
Manchon pour la connexion de tuyaux par fusion

(30) Priority: 04.08.1988 GB 8818521
(43) Date of publication of application: 07.02.1990
(73) Proprietor: UPONOR BV, 5340 AT Oss (NL)
(72) Inventor: Reeves, Anthony Vincent, Selston Notts. NG16 6FN (GB)
(74) Representative: Hall, Robert Leonard

(56) References cited:
- EP-A- 0 230 642
- GB-A- 2 185 130
- US-A- 4 063 247
- US-A- 4 571 488
- US-A- 4 684 789
- ASSEMBLY ENGINEERING no. 4/88, 1988, pages 32 - 34; W.H. SCHWARTZ: 'ASSEMBLY WORKTRACKING'
- PT/ELEKTROTECHNIEK ELEKTRONICA vol. 42, no. 10, October 1987, RIJSWIJK NL pages 23 - 31; C. KLUFT: 'HERKENNEN VAN INDUSTRIELE GERREEDSCHAPPEN'
- TECHNISCHE RUNDSCHAU, vol. 78, no. 30, July 1987, BERN CH pages 46 - 48; VON KLAUS SCHMIDTCHEN: 'FERNPROGRAMMIERBARE DATENTRÄGER GESTALTEN DIE ZUKUNFT DER AUTOMATISIERUNGSTECHNIK'

## Description

This invention relates to a heat fusion pipe fitting system for thermoplastic pipes.

It is known to use thermoplastic heat fusion pipe fittings to join thermoplastic pipe members and also to provide branch pipes by using fittings known as saddles. Such fittings have in the past been provided with electrical heating elements embedded in the body of the fitting in close proximity to the surface of the fitting to enable the fitting to be joined to the pipe by passing a current through the heating element which heats the surface of the fitting and the adjacent surface of the pipe and causes heat fusion of the two.

It is necessary for the operator to know how much current should be passed through the fitting and for what is period of time in order to attain optimum jointing.

In U.S. Specification 4642154 (Fischer) a system is described in which the type and resistance of the heating element are determined in advance by measurement of the wire impedance which indicates both type and ohmic resistance. Welding time is then selected from a predetermined directrix depending on the resistance and the directrix itself is chosen on a basis of type by the impedance measurement.

A more sophisticated system is described in U.S. Patent Specification 4486650 (Fusion Plastics Limited) in which a resistor with a value chosen in accordance with the power to be supplied to the coil is connected between main and auxilliary terminals so that the measurement of the resistance of the coil is not necessary, all that is necessary is to measure the resistance of the addition resistor which provides the required information.

In the present Applicant's U.S. Patent 4571488 (A.V. Reeves assigned to E.I. Du Pont De Nemours & Company) a system is described in which the body of the fusion pipe fitting is provided with a shaped coding tag containing holes or slots arranged in a predetermined sequence for use with a light detecting control system. Signal generating means are used which may for instance be incorporated in or extend from a fusion control unit, which pass an electromagnetic radiation signal through the shaped coding tag and the holes or slots are arranged to pass or stop the electromagnetic radiation in a predetermined sequence for use with a light detecting control system.

This system although satisfactory is limited in the amount of information that can be conveyed.

An object of this invention is to provide a sophisticated pipe fitting system in which an element incorporated in or placed upon the body portion of the pipe fitting may be interrogated by an electromagnetic signal so as to cause the element to transmit the required information.

More specifically in accordance with the present invention there is provided a thermoplastic heat fusion pipe fitting having a body portion adapted to fit over a pipe and to be fused thereto by means of an electrical heating element incorporated in the body portion, and an information containing element being incorporated in or on the body portion, characterised in that said element is arranged to transmit signals revealing said information on being interrogated by an electromagnetic signal from an external source. The electromagnetic signal is preferably a radio frequency signal and said information containing element is preferably a passive element which only emits the information containing signals on interrogation by the RF signal.

Preferably the information containing element itself contains no power source but relies for power on receipt and conversion of the RF signal. Alternatively, the information containing element may be self powered, the power only being switched on when initiated by the RF signal, the element then transmitting the required information.

Information in the information containing element is preferably contained in the form of a micro-chip and may be quite extensive in terms of memory for instance up to 54 bit pre-programmed memory.

The interrogating RF signal may be produced by a fusion control unit which may also contain a decoder to decode the signal transmitted by the information containing element in addition to the other controls normally in a fusion control unit.

The information containing element may contain information selected from, for example:-
time and/or current and/or voltage required to effect fusion;
type of fusion pipe fitting;
manufacturing details e.g. date of manufacture and source;
material from which the pipe fitting is manufactured;
type of pipe fitting (e.g. sleeve or saddle);
compensation characteristic for temperature extremes; and
special instructions for post fusion treatment.

The information containing element may be moulded in to the body portion of the pipe fitting or it may be in the form of a slug or pellet which is snap fitted in to an appropriate cavity in the wall of the fitting.

The transmitter for interrogating the information containing element may be in a lead coming from the fusion control unit or may be in a small box at the end of a lead coming from the fusion control unit or it may be in the fusion control unit itself. The location will depend upon the power of the transmitter.

In the accompanying drawings:-
Figure 1 shows one application of the invention to a sleeve type heat fusion pipe fitting system;
Figure 2 shows the sleeve type fitting with the information containing element incorporated in it; and
Figure 3 is a schematic block diagram showing the essential elements of the system which are incorporated in the fusion control unit.

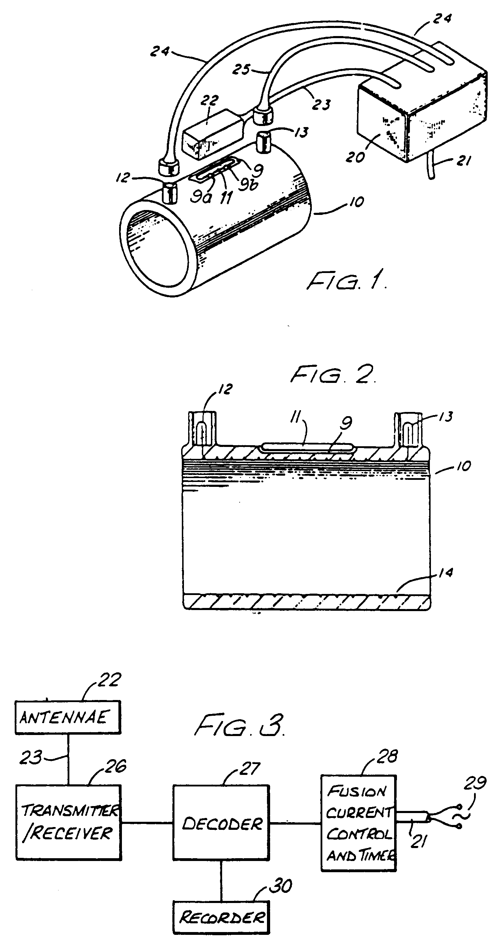

In Figure 1 is shown a tubular or sleeve type pipe fitting adapted to join two pipes end to end. The fitting 10 is provided with terminals 12 and 13 which are connected to a heater wire 14 (see Figure 2) in conventional manner.

In the body of the pipe fitting is a recess 9 in to which is snap fitted an information containing element 11 held in position by lugs 9a and 9b. Alternatively the information containing element 11 could be moulded in the wall of the pipe fitting.

A fusion control unit 20 is provided which is supplied with power via lead 21. The unit 20 is equipped with a transmitter receiver for interrogating the information containing element 11. The transmitter receiver may be incorporated in the control unit 20 and suitable antennae may be incorporated in the box 22. Alternatively the whole of the transmitter receiver equipment may be in box 22 or may be incorporated in the lead 24 or 25.

Power is supplied to the terminals 12 and 13 via leads 24 and 25 again in conventional manner.

The information containing element 11 may contain information as described above but it is particularly preferred that it should contain information as to the voltage and time or current and time necessary for efficient jointing of pipes using the fitting. It may contain much other information as mentioned above.

The fusion control unit 20 may, as mentioned above contain the transmitter receiver 26 (Figure 3) and may supply the interrogating signal in the form of an RF signal via lead 23 to antennae 22 which both transmit the RF and receive the transmission from the information containing element 11. In the control unit 20 may also be a decoder 27 which separates out the information relating to the time and current required and supplies that information to a fusion current control and timer unit 28 supplied by power source 29. The decoder may also supply other information to a recorder 30 so that in the recorder may be collected information relating to each of the fusion pipe fittings fitted in the particular day. The recorder may record all the necessary information not only that derived from the information containing element 11 but also any additional information which may be fed in to the recorder by the operator such as the location of fitting, timer fitting, operator's name etc.

At the end of the day the recorder, or the record it contains, may be removed from the unit 20 and its contents put on to a computer or other form of permanent record.

Although the illustrated pipe fitting is a sleeve the system may equally well be applied to an elbow or saddle type fitting which are available and manufactered by Du Pont (UK) Limited.

Instead of employing a separate antenna, the heater coil may itself be used as the antenna.

The circuit may be arranged so that once fusion is complete the information containing element may be disconnected or isolated so that the fitting cannot be re-fused. Re-fusing of units can be dangerous in that it may lead to overheating, so it is usual to allow at most one re-fuse after a predetermined time has elapsed and only under controlled circumstances. This action may also be controlled by the element 11 e.g. the element 11 may inhibit operation (i.e. a second fusion) until the joint has cooled to a predetermined temperature.

## Claims

1. A thermoplastic heat fusion pipe fitting (10) having a body portion adapted to fit over a pipe and to be fused thereto by means of an electrical heating element (14) incorporated in the body portion, and an information containing element (11) being incorporated in or on the body portion, characterised in that said element (11) is arranged to transmit signals revealing said information on being interrogated by an electromagnetic signal from an external source.

2. A thermoplastic heat fusion pipe fitting according to claim 1 characterised in that said electromagnetic signal is a radio frequency signal.

3. A thermoplastic heat fusion pipe fitting according to claim 1 or 2 and characterised in that said information containing element (11) is a passive element which only emits said signal on interrogation and which does not include its own power source.

4. A thermoplastic heat fusion pipe fitting according to claim 3 characterised in that the power for causing said element to emit a signal is derived from receipt and conversion of the external radio frequency signal.

5. A thermoplastic heat fusion pipe fitting according to claim 1 or 2 characterised in that the information containing element (11) is self-powered and transmits a signal containing information on the power being initiated by the RF signal, the power being derived from a battery contained in the element.

6. A thermoplastic heat fusion pipe fitting according to any preceding claim characterised in that said information containing element is in the form of a micro-chip.

7. A thermoplastic heat fusion pipe fitting according to any preceding claim and characterised in that the interrogator signal is produced by a fusion control unit (28) which also contains a decoder (27) to decode the signal transmitted by the element.

8. A thermoplastic heat fusion pipe fitting according to any preceding claim and characterised in that the information containing element contains information selected from:-
time and/or current and/or voltage required to effect fusion;
type of fusion pipe fitting;
material of which the fusion pipe fitting is manufactured;
manufacturing details, source etc.;
manufacturing details;
source;
temperature compensation; and
special instructions to control unit or operator.

9. A thermoplastic heat fusion pipe fitting according to any of claims 1 to 6 or 8 characterised by being in combination with a fusion control unit the fusion control unit containing a transmitter receiver (26) for interrogating the information containing element, a decoder (27), a fusion current control and timer unit (28), and a recorder (30).

10. A fitting according to any preceding claim characterised in that the electrical heating element (14) is used as an antenna to receive and/or transmit signals.

## Patentansprüche

1. Thermoplastisches, warmschmelzbares Anschlußstück für Rohre (10) mit einem Körperabschnitt, der über ein Rohr paßt und an dieses mittels eines in den Körperabschnitt eingelagerten elektrischen Heizelementes (14) anschmelzbar ist, und mit einem Informationen enthaltenden Element (11), das in dem Körperabschnitt enthalten oder auf ihm angeordnet ist, **dadurch gekennzeichnet**, daß das Element (11) derart ausgebildet ist, daß es diese Informationen wiedergebende Signale aussendet, wenn es durch ein von einer externen Quelle stammendes elektromagnetisches Signal abgefragt wird.

2. Thermoplastisches, warmschmelzbares Anschlußstück für Rohre nach Anspruch 1, dadurch gekennzeichnet, daß das elektromagnetische Signal ein Radiofrequenzsignal ist.

3. Thermoplastisches, warmschmelzbares Anschlußstück für Rohre nach Anspruch 1 oder 2 und dadurch gekennzeichnet, daß das Informationen enthaltende Element (11) ein passives Element ist, das dieses Signal nur bei Abfrage aussendet und keine eigene Energiequelle umfaßt.

4. Thermoplastisches, warmschmelzbares Anschlußstück für Rohre nach Anspruch 3, dadurch gekennzeichnet, daß die die Ausstrahlung eines Signals durch das Element (11) bewirkende Energie durch Empfang und Umwandlung des externen Radiofrequenzsignals gewonnen wird.

5. Thermoplastisches, warmschmelzbares Anschlußstück für Rohre nach Anspruch 1 oder 2, dadurch gekennzeichnet, daß das Informationen enthaltende Element (11) selbst mit Energie versorgt ist und, wenn die Energiezufuhr durch das RF-Signal ausgelöst wird, ein Informationen enthaltendes Signal aussendet, wobei die Energie aus einer im Element enthaltenen Batterie entnommen wird.

6. Thermoplastisches, warmschmelzbares Anschlußstück für Rohre nach einem der vorhergehenden Ansprüche, dadurch gekennzeichnet, daß das Informationen enthaltende Element in Form eines Mikrochips vorliegt.

7. Thermoplastisches, warmschmelzbares Anschlußstück für Rohre nach einem der vorhergehenden Ansprüche und dadurch gekennzeichnet, daß das Abfragesignal von einer Schmelz-Steuereinheit (28) erzeugt wird, die zur Entschlüsselung des vom Element ausgesandten Signals auch einen Dekoder (27) umfaßt.

8. Thermoplastisches, warmschmelzbares Anschlußstück für Rohre nach einem der vorhergehenden Ansprüche und dadurch gekennzeichnet, daß das Informationen enthaltende Element Informationen enthält, die aus folgenden Bereichen ausgewählt sind:
Zeitdauer und/oder Strom und/oder Spannung, die zum Bewirken des Schmelzvorganges erforderlich sind;
Art des schmelzbaren Anschlußstücks für Rohre;
Material, aus dem das schmelzbare Anschlußstück für Rohre gefertigt ist;
Herstellungseinzelheiten , Quelle usw.;
Herstellungseinzelheiten;
Quelle;
Temperaturausgleich und
besondere Anweisungen für die Steuereinheit oder den Benutzer.

9. Thermoplastisches, warmschmelzbares Anschlußstück für Rohre nach einem der Ansprüche 1 bis 6 oder 8, gekennzeichnet durch eine Kombination mit einer Schmelz-Steuereinheit, die zur Abfrage des Informationen enthaltenden Elements einen Sender/Empfänger (26), einen Dekoder (27), eine Schmelzstromsteuer- und -Zeitgebereinheit (28) sowie ein Aufzeichnungsgerät (30) umfaßt.

10. Anschlußstück nach einem der vorhergehenden Ansprüche, dadurch gekennzeichnet, daß das elektrische Heizelement (14) als eine Antenne zum Empfang und/oder zur Aussendung von Signalen verwendet wird.

## Revendications

1. Dispositif de raccordement par fusion de tuyaux thermoplastique comprenant une partie formant corps adaptée pour s'assembler et être fixée par fusion à un tuyau au moyen d'un élément électrique de chauffage (14) incorporé à la partie formant corps, un élément contenant des informations (11) étant incorporé dans ou sur la partie formant corps, caractérisé en ce que ledit élément (11) est adapté pour émettre des signaux révélant lesdites informations lorsqu'il est interrogé par un signal électromagnétique provenant d'une source externe.

2. Dispositif de raccordement par fusion de tuyaux thermoplastique selon la revendication 1, caractérisé en ce que ledit signal électromagnétique est un signal à haute fréquence.

3. Dispositif de raccordement par fusion de tuyaux thermoplastique selon l'une des revendications 1 et 2, caractérisé en ce que ledit élément contenant des informations (11) est un élément passif qui émet ledit signal uniquement lors d'une interrogation et qui ne comporte pas de source de puissance propre.

4. Dispositif de raccordement par fusion de tuyaux thermoplastique selon la revendication 3, caractérisé en ce que la puissance entraînant l'émission d'un signal par ledit élément provient de la réception et de la conversion d'un signal haute fréquence externe.

5. Dispositif de raccordement par fusion de tuyaux thermoplastique selon l'une des revendications 1 et 2, caractérisé en ce que l'élément contenant des informations (11) est auto-alimenté et émet un signal contenant des informations sur la puissance initialisée par le signal haute fréquence, la puissance étant fournie par une batterie contenue dans l'élément.

6. Dispositif de raccordement par fusion de tuyaux thermoplastique selon l'une quelconque des revendications précédentes, caractérisé en ce que ledit élément contenant des informations se présent sous la forme d'une microplaquette.

7. Dispositif de raccordement par fusion de tuyaux thermoplastique selon l'une quelconque des revendications précédentes, caractérisé en ce que le signal d'interrogation est produit par une unité de commande de fusion (28) qui comporte en outre un décodeur (27) pour décoder le signal émis par l'élément.

8. Dispositif de raccordement par fusion de tuyaux thermoplastique selon l'une quelconque des revendications précédentes, caractérisé en ce que l'élément contenant des informations contient des informations sélectionnées parmi :
- durée et/ou courant et/ou tension nécessaire pour réaliser la fusion ;
- type de raccord de tuyaux par fusion ;
- matériau sur lequel le raccord de tuyaux par fusion est fabriqué ;
- particularité de fabrication, source, etc...;
- particularité de fabrication ;
- source ;
- compensation en température ; et
- instructions spéciales pour l'unité ou le pupitre de commande.

9. Dispositif de raccordement par fusion de tuyaux thermoplastique selon l'une quelconque des revendications 1 à 6 ou 8, caractérisé en ce qu'il est combiné avec l'unité de commande de fusion, l'unité de commande de fusion comportant un émetteur/récepteur (26) pour interroger l'élément contenant des informations, un décodeur (27), un dispositif de commande du courant de fusion et une unité de minuterie (28), et un dispositif d'enregistrement (30).

10. Dispositif de raccordement selon l'une quelconque des revendications précédentes, caractérisé en ce que l'élément électrique de chauffage (14) est utilisé sous forme d'une antenne pour recevoir et/ou émettre des signaux.
